# EUROPEAN PATENT APPLICATION

(11) **EP 3 355 663 A1**
(43) Date of publication of application: **01.08.2018**
(21) Application number: 16848300.6
(22) Date of filing: 06.09.2016
(51) Int. Cl.: H05B 6/12, F24C 7/04

(54) **COOKING APPARATUS**

(30) Priority: 25.09.2015 JP 2015188467
(71) Applicant: Panasonic Intellectual Property Management Co., Ltd., Osaka-shi, Osaka 540-6207 (JP)
(72) Inventor: FUJITA, Atsushi, Osaka-shi, Osaka 540-6207 (JP); OHTA, Katsuyuki, Osaka-shi, Osaka 540-6207 (JP)
(74) Representative: Schwabe - Sandmair - Marx
(86) International application number: PCT/JP2016/004054
(87) International publication number: WO 2017/051509

(57) **Abstract**

In a heating cooker, casing (5) is supported by supporter (6) via weight detector (7) at a position which is lower than an opening surface of opening portion (12a) of mounting table (12) and weight detector (7) detects a weight of an object to be heated in cooking container (1) or the like disposed on casing (5) and top plate (2). Accordingly, detection accuracy and reliability can be secured without affecting weight detector (7) even if a liquid material flows out on mounting table (12). In addition, the heating cooker which has an improved design ability and high convenience can be provided by the height of the heating cooker further rising than mounting table (12) in the upper direction being suppressed to be lowered.

## Description

### TECHNICAL FIELD

The present disclosure relates to a heating cooker used in general households, restaurants, offices, or the like.

### BACKGROUND ART

In recent years, a heating cooker which is incorporated in a system kitchen or the like and heats a cooking container such as a pot and a frying pan is widely spread. The heating cooking container includes an induction heating cooker which inductively heats by an induction heating coil, a gas heating cooker by direct gas firing, a heater heating cooker which heats with an electric heater or the like.

For example, an induction heating cooker including a configuration for detecting the weight of an object to be heated in order to perform optimum heating control corresponding to the weight of the object to be heated is disclosed (see, for example, PTL 1 to PTL 4).

First, the heating cooker disclosed in PTL 1 will be described using FIG. 11.

FIG. 11 is a configuration diagram illustrating a configuration of the heating cooker disclosed in PTL 1.

As illustrated in FIG. 11, the heating cooker of PTL 1 includes heater 124, temperature detector 125, top plate 123 on which object to be heated 122 is mounted, inverter 126, controller 127, weight detector 128, operator 130, elastic body 132, magnetic shield ring 133, storage portion 134, and the like. Temperature detector 125 detects the temperature of object to be heated 122. Weight detector 128 is disposed under top plate 123 and is provided so as to preload and support top plate 123 in an upper direction. Operator 130 selects one cooking menu from a plurality of cooking menus. Storage portion 134 stores a heating sequence or the like for each cooking menu.

Controller 127 controls the output of heater 124 in a plurality of stages via inverter 126 based on the heating sequence stored in advance for each cooking menu and the information of temperature detector 125 and weight detector 128 and cooks the object to be heated by heating.

Next, a heating cooker disclosed in PTL 2 will be described using FIG. 12.

FIG. 12 is an exploded perspective view of the heating cooker disclosed in PTL 2.

As illustrated in FIG. 12, the heating cooker of PTL 2 includes object to be heated 202, heating coils 204a and 204b, top plate 203, temperature detectors 205a and 205b, first to third weight detectors 221, 222, and 223, a storage portion, and the like. Object to be heated 202 contains the food. Heating coils 204a and 204b heat object to be heated 202. Object to be heated 202 is mounted in top plate 203. Temperature detectors 205a and 205b detect the temperature of object to be heated 202. First to third weight detectors 221, 222, and 223 detect the weight of top plate 203. The storage portion stores a heating sequence or the like for each cooking menu to be set.

The heating cooker first detects the temperature of object to be heated 202 at temperature detectors 205a and 205b and calculates the weights of object to be heated 202 from the weight detected at first to third weight detectors 221, 222, and 223. Based on the pre-stored heating sequence and the calculated weight, cooking by heating is performed while the outputs of heating coils 204a and 204b are controlled in a plurality of stages.

The heating cookers of PTL 1 and PTL 2 include a weight detector for preloading and supporting the top plate between a main body case and the top plate in the upper direction. The weight detector detects the weight and the mounting position of the object to be heated, the completion of cooking, or the like and cooks the object to be heated by heating.

Next, an electromagnetic cooker disclosed in PTL 3 will be described using FIG. 13.

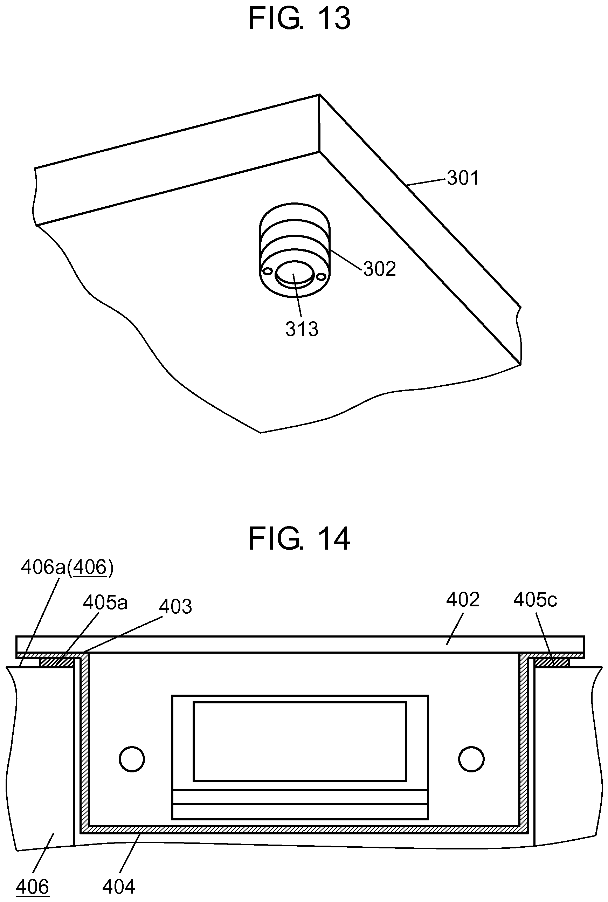

FIG. 13 is a perspective view illustrating an outer appearance of the electromagnetic cooker disclosed in PTL 3 viewed from the back side thereof.

As illustrated in FIG. 13, the electromagnetic cooker of PTL 3 includes top plate 301, support leg 302, pressure sensor 313 which is a weight sensor, a display, and the like. Support leg 302 is provided at the four corners of a casing (not illustrated) to which top plate 301 is fixed. Pressure sensor 313 is disposed to be in contact with the lower end of support leg 302. The display displays the weight of the object to be heated which is the detection result of pressure sensor 313 or the like.

The heating cookers and the electromagnetic cooker disclosed in PTL 1 to PTL 3 include a weight detector between the supporter of the casing and the top plate. At this time, in a case where cooking is performed by detecting the weight of the object to be heated mounted on the top plate and the position on which the object to be heated is mounted, a gap is generated between the top plate and the casing. Therefore, the liquid flowing down through the gap during cooking penetrates into an inside portion of the casing. When liquid penetrates, there is a case where problems generate in equipment in the inside of the casing.

Here, in order to prevent liquid from penetrating into the inside portion of the casing, an induction heating cooker of PTL 4 illustrated in FIG. 14 is proposed.

FIG. 14 is a front view schematically illustrating the induction heating cooker disclosed in PTL 4.

As illustrated in FIG. 14, the induction heating cooker disclosed in PTL 4 includes top plate 402, casing 404 installed in a lower side of top plate 402, and a plurality of weight detectors 405a and 405c preloading and supporting outer flange 403 which overhangs an outside portion of casing 404, and the like. Weight detectors 405a and 405c are disposed between outer flange 403 and the periphery of the opening portion of kitchen table 406. The induction heating cooker calculates the values detected by weight detectors 405a and 405c, and detects the position and the weight of the object to be heated mounting on top plate 402.

However, the induction heating cooker disclosed in PTL 4 has the problems such as (A) to (C) described below.
(A) The weight detector is disposed on a lower surface of the outer flange. In this case, in order to accurately detect the weight, it is necessary to provide a certain space between a kitchen table accommodating the casing and the outer flange. Therefore, the height of the induction heating cooker further rising than the top surface of the kitchen table in the upper direction is increased. Accordingly, design ability and convenience of the induction heating cooker are impaired.
(B) As a weight detector such as a scale, generally a beam type load cell provided with a through hole is used. In this case, in order to install the load cell, it is necessary to consider the component height of several cm or more.
   On the other hand, there is a flat load cell for applications such as a weight scale. However, this load cell has a large change with temperature, and it is difficult to secure accuracy.
   In other words, in the configuration of the induction heating cooker of PTL 4, it is difficult to simultaneously satisfy securing of a small space described in (A) and securing of detection accuracy described in (B). In other words, it is very difficult to simultaneously satisfy both thinning of the weight detector and the improvement in weight detection accuracy.
(C) Here, in the induction heating cooker of PTL 4, the weight detector is disposed in the space between kitchen table 406 and outer flange 403.

However, with the above configuration, in a case where liquid material flows out onto the kitchen table, the liquid material penetrates into the weight detector. Therefore, there is a concern that problems such as rusting of the metal portion or the like constituting the weight detector, deterioration of a resin portion, or the like are generated.

### Citation List

### Patent Literature

PTL 1: Japanese Patent Unexamined Publication No. 2006-073347
PTL 2: Japanese Patent Unexamined Publication No. 2006-253007
PTL 3: Japanese Patent Unexamined Publication No. 59-175586
PTL 4: Japanese Patent Unexamined Publication No. 2010-135289

### SUMMARY OF THE INVENTION

The disclosure provides a heating cooker can secure accuracy and reliability without affecting a weight detector even if a liquid material flows out on a kitchen table.

The heating cooker of present disclosure includes a top plate on which a cooking container for accommodating food is mounted, a heater for heating the cooking container, and a controller for controlling the heater. Further, the heating cooker includes a casing which has an upper surface configured by a top plate and incorporates at least a heater and a controller, a supporter for accommodating the casing, and a mounting table for mounting and accommodating the supporter in an opening portion, and a weight detector for detecting the weight. The casing is supported by the supporter via the weight detector at a position lower than an opening surface of the opening portion of the mounting table, and the weight detector is configured to detect the weight of the cooking container mounted on the top plate.

According to the configuration, accuracy and reliability can be secured without affecting the weight detector due to the penetration of the liquid material, even if the liquid material flows out on the kitchen table which is the mounting table. In addition, height of the heating cooker further projecting than the kitchen table in the upper direction can be suppressed to be lowered. Accordingly, the heating cooker improving design ability and having high convenience can be provided.

### BRIEF DESCRIPTION OF DRAWINGS

FIG. 1 is a schematic cross-sectional view illustrating a schematic configuration of a heating cooker in a first exemplary embodiment of the disclosure.
FIG. 2 is a schematic configuration diagram illustrating a main portion of the heating cooker.
FIG. 3 is a schematic configuration diagram illustrating the main portion of the heating cooker.
FIG. 4 is a schematic configuration diagram illustrating another configuration of a main portion of the heating cooker.
FIG. 5 is a schematic configuration diagram illustrating another configuration of the main portion of the heating cooker.
FIG. 6 is a schematic configuration diagram illustrating another configuration of the main portion of the heating cooker.
FIG. 7 is a schematic configuration diagram illustrating another configuration of the main portion of the heating cooker.
FIG. 8 is a schematic configuration diagram illustrating another configuration of the main portion of the heating cooker.
FIG. 9 is a schematic cross-sectional view illustrating a schematic configuration of a heating cooker in a second exemplary embodiment of the disclosure.
FIG. 10 is a schematic configuration diagram illustrating another configuration of a main portion of the heating cooker.

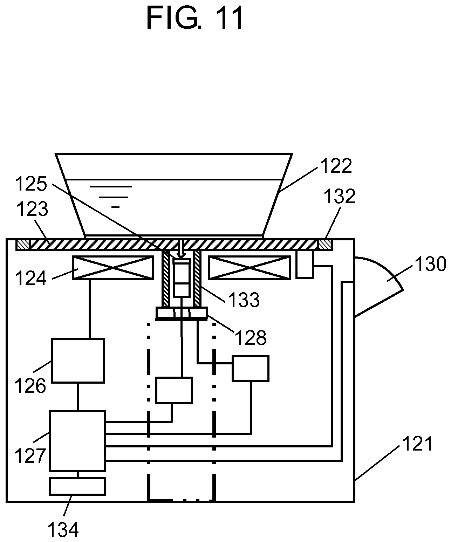

FIG. 11 is a configuration diagram illustrating a configuration of a heating cooker of the related art.

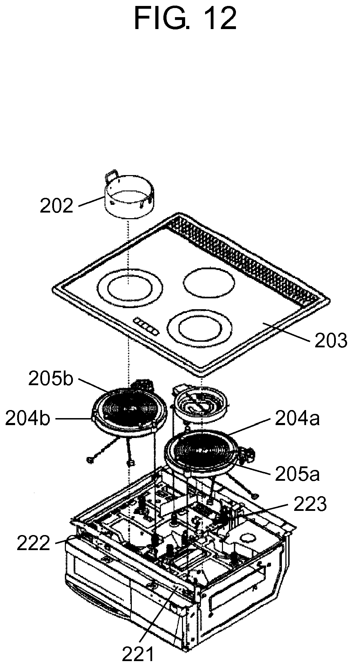

FIG. 12 is an exploded perspective view illustrating a configuration of a heating cooker of the related art.
FIG. 13 is a perspective view illustrating an outer appearance of an electromagnetic cooker of the related art viewed from a back side thereof.
FIG. 14 is a front view schematically illustrating induction heating cooker of the related art.

### DESCRIPTION OF EMBODIMENTS

Hereinafter, exemplary embodiments of the disclosure will be described with reference to the drawings. The disclosure is not limited by the exemplary embodiments.

### (FIRST EXEMPLARY EMBODIMENT)

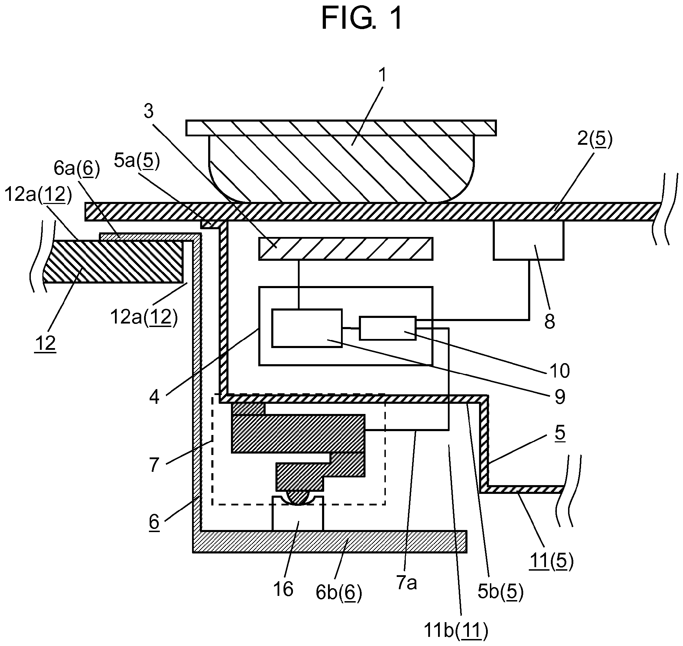

Hereinafter, a heating cooker according to an exemplary embodiment of the disclosure will be described with reference to FIG. 1.

FIG. 1 is a schematic cross-sectional view illustrating a schematic configuration of a heating cooker in a first exemplary embodiment of the disclosure.

As illustrated in FIG. 1, the heating cooker of the exemplary embodiment is configured by cooking container 1, heater 3, controller 4, casing 5 configured from top plate 2 and steel plate 11, supporter 6, weight detector 7, a mounting table 12, and the like. Cooking container 1 accommodates food to be cooked by transmission of heat. Heater 3 heats cooking container 1. Controller 4 controls heater 3. Casing 5 includes an upper surface configured by top plate 2, and incorporates at least heater 3 and controller 4. In other words, top plate 2 of casing 5 constitutes a mounting surface on which cooking container 1 is mounted.

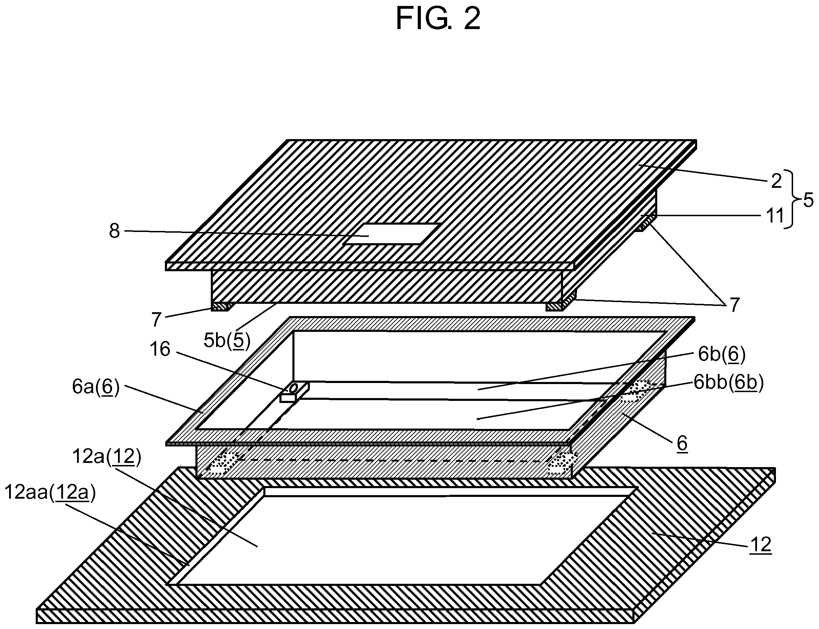

In addition, the heating cooker of the exemplary embodiment includes operating display 8 (see FIG. 2) for receiving an operation input by a user and displaying information from the heating cooker. Operating display 8 is connected to controller 4 and disposed on a position visible from the user.

Heater 3 is configured by, for example, an induction heating coil for generating a high frequency electromagnetic field by supplying a high frequency current and inductively heating cooking container 1.

Controller 4 is configured by inverter 9, driving controller 10, and the like. Inverter 9 controls the high frequency electromagnetic field generated from the induction heating coil which is heater 3 by adjusting the frequency, current amount, or the like of the high frequency current.

Driving controller 10 is mainly configured by a microcomputer and peripheral circuits thereof, and controls driving of inverter 9. Specifically, driving controller 10 controls driving of inverter 9 based on an operation by the user via operating display 8 and information such as current, voltage, and power of inverter 9. In other words, driving controller 10 adjusts the high-frequency current supplied from inverter 9 to the induction heating coil which is heater 3. Accordingly, driving controller 10 appropriately heats the object to be heated by changing electric power for heating cooking container 1.

As described above, the lower half of casing 5 is configured by steel plate 11 having a thickness t of about 1 mm, for example. Steel plate 11 is formed in a box shape with an upper surface thereof opened. An upper end portion of steel plate 11 having the box shape includes flange 5a which is bent in the outside direction. Flange 5a is in contact with a lower surface of top plate 2 configuring the upper half of casing 5. Steel plate 11 of casing 5 is fixed to top plate 2 by, for example, a screw or the like. Accordingly, in casing 5, a substantially sealed space (including a sealed space) is formed by box-shaped steel plate 11 and top plate 2.

An induction heating coil which is heater 3, inverter 9, driving controller 10, and the like are incorporated in the substantially sealed space (including the sealed space) of casing 5.

Next, the configuration of a periphery of the supporter of the heating cooker of the exemplary embodiment will be described using FIG. 2.

FIG. 2 is a schematic configuration diagram illustrating an example of a peripheral configuration of supporter 6 of the heating cooker.

As illustrated in FIG. 2, supporter 6 is configured by a box-like steel plate having flange 6a having a shape which is substantially the same (including the same) as that of steel plate 11 forming a lower half of casing 5. Supporter 6 has a shape slightly larger than steel plate 11 so that box-shaped steel plate 11 of casing 5 can be accommodated.

Large opening portion 6bb is formed on bottom surface 6b of supporter 6. Opening portion 6bb of bottom surface 6b is formed in consideration of suppressing the weight as low as possible while securing the strength of supporter 6.

Flange 6a of supporter 6 is formed in a width shape so as not to rise from top plate 2 when casing 5 is accommodated.

The height of supporter 6 is set so that a gap of about 1 mm, for example, is formed between a lower surface of top plate 2 and an upper surface of flange 6a of supporter 6 when casing 5 is accommodated.

A portion other than flange 6a of supporter 6 is accommodated in the lower side from opening portion 12a of mounting table 12 constituting the kitchen table for performing cooking and the like. The flange 6a portion is installed in such a size and shape which are in contact with end portion 12aa of the opening portion of mounting table 12. Supporter 6 is mounted so as to be suspended from mounting table 12. At this time, as described above, supporter 6 is mounted between the upper surface of flange 6a of supporter 6 and the lower surface of top plate 2 in a positional relationship in which a gap is formed.

Specifically, in a case where casing 5 and supporter 6 are installed on mounting table 12 in the above-described positional relationship, the height of the portion protruding from upper surface 12b of mounting table 12 in the upper direction is about 6 mm which is sum of about 4 mm of the thickness of top plate 2, about 1 mm of the thickness of the steel plate of supporter 6, and 1 mm of the gap between top plate 2 and flange 6a of supporter 6. Accordingly, this is comparable to the height of about 4 mm of the conventional cooker. In addition, as compared with the heating cooker of the related art having a height of about 30 mm or more in a case where weight detector 7 is disposed between top plate 2 and upper surface 12b of the mounting table, the heating cooker can be mounted in a state where the height thereof is suppressed.

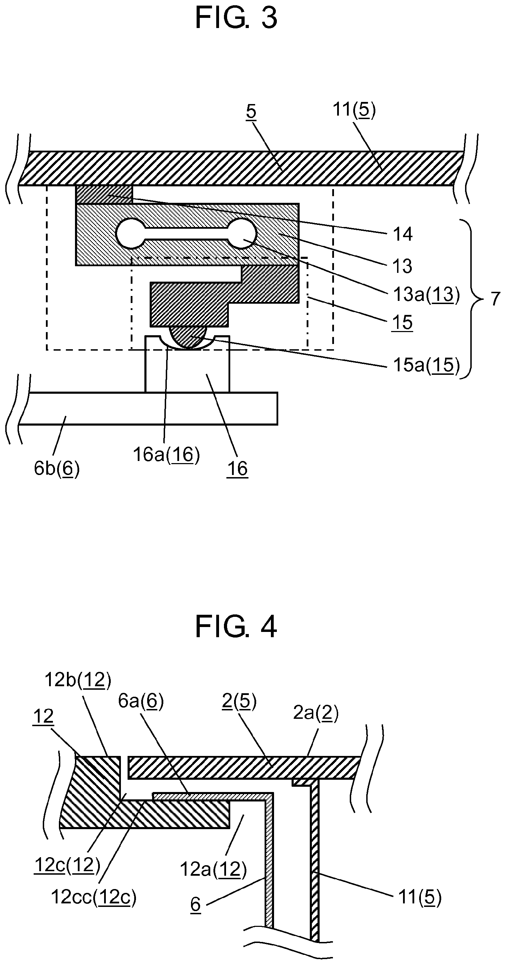

Next, weight detector 7 of the heating cooker and the peripheral configuration thereof will be described using FIG. 3.

FIG. 3 is a schematic configuration diagram illustrating an example of a peripheral configuration of weight detector 7 of the heating cooker.

As illustrated in FIG. 3, weight detector 7 includes weight sensor 13 configured by, for example, a load cell, fixed connector 14, load transmitter 15, and the like. Fixed connector 14 connects between weight detector 7 and steel plate 11 of casing 5 with each other. Load transmitter 15 supports to transmit the load of casing 5, cooking container 1, or the like to supporter 6 via load receiver 16 to be described below.

Specifically, weight sensor 13 is configured by a beam type load cell having through hole 13a. Although beam type load cell has a component height of about 2 cm, detection accuracy thereof is extremely excellent.

Load transmitter 15 includes a lens-shaped projecting portion 15a at a tip thereof. Projecting portion 15a of load transmitter 15 is disposed to be in contact with lens-shaped concave portion 16a of load receiver 16 provided at a position facing supporter 6. At this time, projecting portion 15a of load transmitter 15 and concave portion 16a of load receiver 16 are connected by point contact. Accordingly, it is configured so that the load from the vertical direction is applied to weight detector 7 by the load from the horizontal direction being suppressed.

As described above, supporter 6 has a shape which is slightly larger than the steel plate so as to be able to accommodate steel plate 11 portion of casing 5. In addition, the height of supporter 6 is set so that a gap of about 1 mm is formed between top plate 2 and flange 6a of supporter 6 when casing 5 is accommodated. Accordingly, casing 5 and supporter 6 are disposed in a positional relationship to be connected via only weight detector 7.

In other words, casing 5 is supported by supporter 6 via weight detector 7 at a position lower than the opening surface of opening portion 12a of mounting table 12. Accordingly, weight detector 7 is in a state of being capable of detecting the weight of the object to be mounted such as cooking container 1 mounted on casing 5 and top plate 2.

As illustrated in FIG. 1, weight detector 7 is disposed in recess 11b at four corners (see FIG. 2) of bottom surface 5b of steel plate 11 of casing 5, and detects a load applied to each of the corners, for example. Recess 11b is recessed from bottom surface 5b of steel plate 11 to top plate 2 side. At this time, the depth of recess 11b is formed so that at least a portion of load transmitter 15 of weight detector 7 protrudes from the lowest component of steel plate 11 in the lower direction. A detected output signal is transmitted to controller 4 via signal line 7a illustrated in FIG. 1. Controller 4 converts the input output signals into weights, and displays the converted weights on operating display 8.

In other words, weight detector 7 is disposed in recess 11b of bottom surface 5b of the outside in steel plate 11 of casing 5. Accordingly, weight detector 7 is disposed between casing 5 and supporter 6. With this disposition, for example, in a case where the performance of weight detector 7 is deteriorated due to long-term use, impact, or the like, it is possible to cope with replacement of only weight detector 7 without replacement for each casing 5. As a result, the heating cooker can be continuously used by a simple exchange operation.

The heating cooker of the exemplary embodiment is configured as described above.

The operation and action of the heating cooker having the above configuration will be described below.

First, the measurement of the weight is started.

Specifically, the user mounts only cooking container 1 on top plate 2 and instructs controller 4 to start measurement of the weight via operating display 8. At this time, the load applied to weight detector 7 is increased or changed due to operation of a user (for example, pressing operation or the like) via operating display 8. Here, controller 4 holds the detection output signal of weight detector 7 immediately before the weight measurement start is instructed. Controller 4 causes operating display 8 to display "0 g", for example, with the held detection output signal as the reference weight.

In the above state, the user adds soup stock, an ingredient, seasoning, or the like, which is food to the cooking container 1. Controller 4 monitors the detection output signal of weight detector 7, converts the added food into weight, and displays the weight on operating display 8 each time.

At this time, in a case where the user gives an instruction to subtract the tare weight via operating display 8, controller 4 holds the previous detection output signal of weight detector 7 and controller 4 causes operating display 8 to display "0 g", for example, with the held detection output signal as the reference weight.

Controller 4 terminates the weight measurement after a lapse of a fixed time from the start of the weight measurement. Controller 4 is in a state of operation waiting by the user.

Next, heating of the cooking container 1 is started by heater 3.

Specifically, the user instructs controller 4 to start heating via operating display 8.

Driving controller 10 of controller 4 controls and outputs inverter 9 so that the high frequency current applied to the induction heating coil which is heater 3 is gradually increased. At this time, driving controller 10 monitors the voltage, current, power, or the like of inverter 9. Accordingly, driving controller 10 confirms that the output of inverter 9 is in the set operation region. While checking the operation in the operation region, driving controller 10 controls and drives the output of inverter 9 so as to obtain the heating electric power instructed by the user.

Even in a case where the user instructs controller 4 to start measurement of the weight via operating display 8 during the heating of cooking container 1, such as in a case where seasoning or the like is added during cooking, controller 4 operates as described above.

In other words, similarly to a series of weight measurement operation described above, controller 4 displays weight on operating display 8 based on the detection output signal of weight detector 7.

At this time, there is a case where the following problems may generate during a series of weight measurement and heating operation. Specifically, the user mistakenly causes the liquid material such as soup and stew in cooking container 1 to flow out. Alternatively, the user causes the liquid material to flow out onto mounting table 12 during cooking preparation. Accordingly, there is a case where the flowing-out liquid material is penetrated from upper surface 12b of the mounting table 12 to supporter 6.

However, in the configuration of the heating cooker of the exemplary embodiment, only top plate 2 and flange 6a portion of supporter 6 are disposed on mounting table 12. At this time, weight detector 7 which is concerned about rusting of the metal portion and deterioration of the resin portion is disposed at a position lower than the opening surface of opening portion 12a of mounting table 12. Therefore, the flowing-out liquid material does not directly penetrated into weight detector 7. Accordingly, the rust of the metal portion and the deterioration of the resin portion constituting a portion of the weight detector 7 can be prevented in advance.

As described above, according to the heating cooker of the exemplary embodiment, a gap is formed between mounting table 12 and top plate 2. However, weight detector 7 is not disposed in the formed gap. Therefore, the height of the heating cooker which further rises than the kitchen table which is mounting table 12 in the upper direction can be suppressed to be lowered. Accordingly, design ability is improved. Further, when the user handles the pan, the possibility that the pan hit the end portion of top plate 2 is decreased. Accordingly, high workability and convenience can be provided to the user.

In addition, according to the heating cooker of the exemplary embodiment, weight detector 7 is disposed between casing 5 and supporter 6 in the inside portion of mounting table 12 with less height restriction. Therefore, for example, weight detector 7 having high height of components can be disposed. In other words, a beam type load cell including a through hole, which suppresses characteristic changes due to external factors such as temperature and has high detection accuracy can be adopted as weight detector 7.

In addition, according to the heating cooker of the exemplary embodiment, weight detector 7 is not disposed on mounting table 12. Therefore, even if a liquid material such as soup, stew, soy sauce, and oil flows out on mounting table 12, the liquid material does not reach weight detector 7. Accordingly, the generation of rusting of metal components or the like and deterioration of resin components or the like used in the weight detector 7 can be decreased. As a result, a heating cooker having an excellent configuration in the viewpoints of durability and reliability can be realized.

In the exemplary embodiment, although the configuration of disposition for suspending flange 6a of supporter 6 on upper surface 12b of the kitchen table which is mounting table 12 is described as an example, it is not limited thereto. For example, in the following, a configuration of disposition described using FIG. 4 may be adopted.

FIG. 4 is a schematic configuration diagram of a main portion illustrating another example of the configuration of disposition of the heating cooker.

In other words, as illustrated in FIG. 4, step 12c is provided in opening portion 12a of kitchen table which is mounting table 12. Flange 6a of supporter 6 is disposed so as to be suspended from lower step 12cc of step 12c. At this time, it is preferable that heights of upper surface 12b of mounting table 12 and upper surface 2a of top plate 2 be disposed to match (be flush) with each other. Accordingly, the surfaces of mounting table 12 and top plate 2 are in a full flat state. As a result, a configuration having further improved design ability is possible.

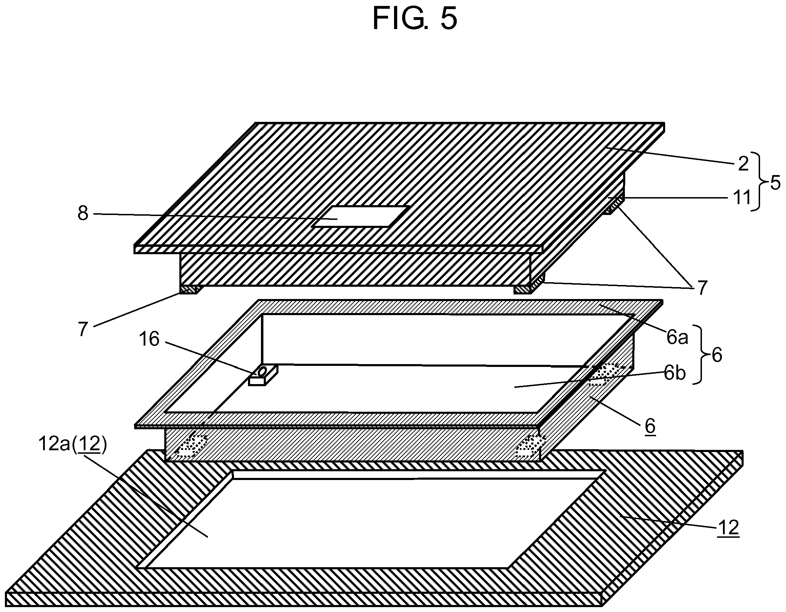

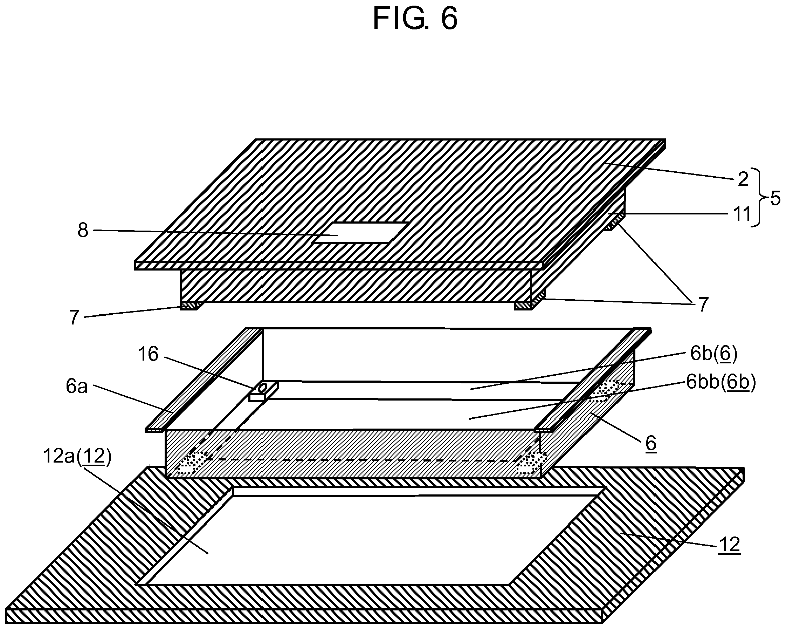

In addition, in the exemplary embodiment, although it is described that supporter 6 has a box shape having flange 6a at the upper end and opening portion 6bb at bottom surface 6b as an example, it is not limited thereto. For example, in the following, a configuration of a supporter having a shape described using FIG. 5 and Fig. 6 may be adopted.

FIG. 5 is a schematic configuration diagram of the main portion illustrating another example of the configuration of the periphery of the supporter of the heating cooker. FIG. 6 is a schematic configuration diagram of the main portion illustrating yet another example of the configuration of the periphery of the supporter of the heating cooker.

In other words, as illustrated in FIG. 5, supporter 6 may be configured to have a shape which does not have an opening portion on bottom surface 6b. Accordingly, the rigidity (mechanical strength) of supporter 6 can be increased.

In addition, as illustrated in FIG. 6, supporter 6 may have a configuration in which flanges 6a disposed at four positions described in FIG. 2 are disposed on two positions facing each other, for example. Accordingly, the weight of supporter 6 can be further decreased.

In other words, as long as sufficient strength and rigidity to support the load of casing 5, cooking container 1, or the like and not to cause deformation or the like can be secured, supporter 6 is not limited to the above shape and may have any shape.

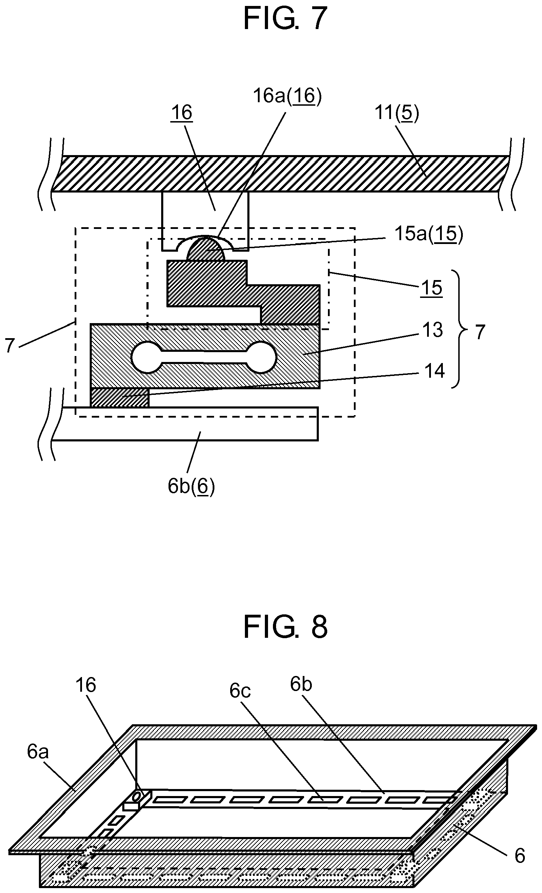

In addition, in the exemplary embodiment, although bottom surface 6b of supporter 6 has been described by way of example of a configuration without hole or the like other than opening portion 6bb, but it is not limited thereto. For example, as illustrated in FIG. 8, hole 6c, a slit or the like may be provided on bottom surface 6b as appropriate. Accordingly, in some case, even if a liquid material or the like which is penetrated reaches bottom surface 6b, the liquid material can be dropped in the lower side of supporter 6 without staying on supporter 6. In this case, it is preferable to dispose a recovery container for the liquid material, a foreign matter, or the like on the lower side of supporter 6. Accordingly, the cleaning work is easy, and the heating cooker can be always maintained hygienically.

In addition, in the exemplary embodiment, although the configuration in which weight detector 7 is fixed to steel plate 11 of casing 5 via fixed connector 14 has been described as an example, it is not limited thereto. For example, as illustrated in FIG. 7, weight detector 7 may be configured to be disposed to be reversed upside down and to be fixed to supporter 6 via the fixed connector 14. In this case, configuration that load receiver 16 is fixed to the bottom surface of casing 5 and is in point contact with load transmitter 15 connected to weight sensor 13 is preferred.

In addition, in the exemplary embodiment, although the configuration in which the tip of load transmitter 15 is formed as lens-shaped projecting portion 15a is described as an example, it is not limited thereto. For example, conversely, the tip of load transmitter 15 may be a lens-shaped concave portion, and load receiver 16 may be a lens-shaped projecting portion. In short, load transmitter 15 and load receiver 16 may be configured to be in contact with each other, for example, in point contact with each other. In other words, it may be configured so that the load from the vertical direction is applied to weight detector 7 by the load from the horizontal direction being suppressed.

In addition, in the exemplary embodiment, although weight detector 7 is described as being disposed in recess 11b formed in steel plate 11 of casing 5 as an example, it is not limited thereto. For example, without forming recess 11b, weight detector 7 may be disposed on bottom surface 5b of steel plate 11. Accordingly, the shape of steel plate 11 can be simplified and cost reduction can be achieved.

In addition, in the exemplary embodiment, although a configuration that controller 4 monitors the detection output signal of weight detector 7 and displays the signal on operating display 8 is described as an example, it is not limited to this. For example, a configuration that the user sets and displays the display update interval via operating display 8 in advance may be adopted. In addition, the detection output signal may be read at a sufficiently fast cycle than the vibration of cooking container 1, and a predetermined period of the detection output signal may be averaged and displayed. Further, in a case where the detection output signal fluctuates extremely, other detection output signals may be displayed by ignoring the extremely fluctuating detection output signal. Accordingly, the detection accuracy of the detection output signal can be further increased, and cooking by heating can be performed more effectively.

In addition, in the exemplary embodiment, the configuration in which there is no influence of electromagnetic noise due to the operation of the incorporated inverter 9 is described as an example. However, in a case where the influence of electromagnetic noise cannot be ignored, it may be configured that the detection output signal is read by weight detector 7 at intervals sufficiently faster than operation frequency of the inverter 9. In addition, a configuration which eliminates a large change in the detection output signal estimated by electromagnetic noise may be adopted. Further, a noise filter for attenuating high frequency signals may be provided in a detection signal line between weight detector 7 and controller 4. Accordingly, the detection output signal can be detected with high accuracy by being stabilized.

In addition, in the exemplary embodiment, although heater 3 is configured by an induction heating coil, and cooking container 1 is configured to be inductively heated, as an example, it is not limited thereto. For example, cooking container 1 may be heated by an electric heater or the like, or heated by direct firing of gas or the like. Accordingly, a heating cooker with high versatility can be realized.

### (SECOND EXEMPLARY EMBODIMENT)

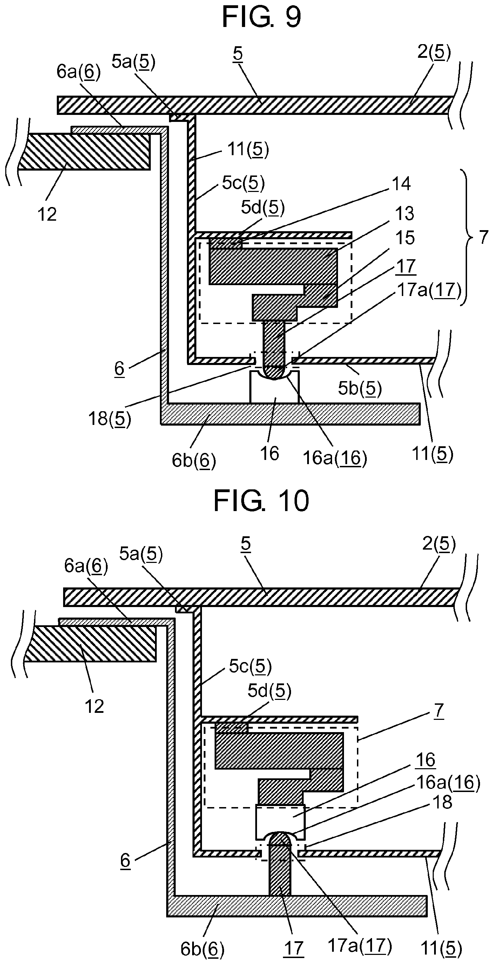

Hereinafter, a heating cooker according to a second exemplary embodiment of the present disclosure will be described with reference to FIG. 9.

FIG. 9 is a schematic cross-sectional view illustrating a schematic configuration of a heating cooker in a second exemplary embodiment of the disclosure.

As illustrated in FIG. 9, the heating cooker of the exemplary embodiment is different from that of the first exemplary embodiment in that weight detector 7 is disposed in the inside portion of casing 5. Since other configurations, operations, and actions are the same as those in the first exemplary embodiment, different configurations will be described in more detail.

In other words, weight detector 7 of the exemplary embodiment is disposed in the inside portion of casing 5. Specifically, weight sensor 13 of weight detector 7 is fixed to projecting portion 5d extending from inside wall 5c of casing 5 via fixed connector 14. Cylindrical connector 17 having a diameter of about 20 mm, for example, is fixedly connected to the tip of load transmitter 15 of weight detector 7.

In casing 5, a casing opening portion 18 having a diameter of about 25 mm, for example, through which connector 17 can pass without interference is formed on bottom surface 5b.

When assembled, connector 17 of weight detector 7 projects from casing opening portion 18 formed on bottom surface 5b of casing 5 in the lower direction. Projecting connector 17 is disposed so as to be in contact with load receiver 16 of supporter 6 provided corresponding to weight detector 7.

At this time, connector 17 which is in contact with load receiver 16 includes lens-shaped projecting portion 17a at the tip. On the other hand, load receiver 16 includes lens-shaped concave portion 16a. Projecting portion 17a of connector 17 is mounted to be in contact with concave portion 16a of load receiver 16 provided at the position facing supporter 6. Projecting portion 15a of load transmitter 15 and concave portion 16a of load receiver 16 are connected by point contact. Accordingly, it is configured so that the load from the vertical direction is applied to weight detector 7 by the load from the horizontal direction being suppressed.

In other words, in the heating cooker of the present exemplary embodiment, weight detector 7 is disposed in the inside portion of casing 5 and is configured to support casing 5 by supporter 6 via connector 17. Weight detector 7 detects the weight of the object to be mounted such as cooking container 1 mounted on casing 5 and top plate 2 supported by supporter 6 via connector 17.

As described above, in the heating cooker of the present exemplary embodiment, weight detector 7 is disposed in inside of the casing 5. Therefore, for example, problems such as transportation in the unpacked state at the factory and damage due to contact at the time of installation is unlikely to be generated. Further, weight detector 7 is unlikely to be dirt. Accordingly, handling of the heating cooker is facilitated and workability such as installation is improved.

In the exemplary embodiment, although the configuration in which connector 17 is fixedly connected to weight detector 7 is described as an example, it is not limited thereto. For example, in the following, a configuration described using FIG. 10 may be adopted.

FIG. 10 is a schematic configuration diagram illustrating another configuration of the main portion of the heating cooker.

In other words, as illustrated in FIG. 10, connector 17 is fixedly connected to bottom surface 6b of supporter 6. On the other hand, load receiver 16 is fixedly connected to weight detector 7. Connector 17 and load receiver 16 are disposed so as to be in contact with each other. In this case, weight detector 7 and members connected thereto are not exposed to outside from the casing 5. Therefore, in a case where casing 5 and supporter 6 are transported or stored in a state of being separated from each other, no load is exerted on weight detector 7 from the outside even if casing 5 is mounted. Accordingly, damage to weight detector 7 due to impact or the like can be prevented. As a result, a heating cooker with higher reliability can be provided.

In addition, in the exemplary embodiment, although the configuration in which the tip of connector 17 is formed as lens-shaped projecting portion 17a is described as an example, it is not limited thereto. For example, conversely, the tip of connector 17 may be a concave portion and load receiver 16 may be a projecting portion. In short, connector 17 and load receiver 16 may be configured to be in contact, for example in point contact, with each other. In other words, it may be configured so that the load from the vertical direction is applied to weight detector 7 by the load from the horizontal direction being suppressed.

As described above, the heating cooker of the disclosure includes a top plate on which a cooking container for accommodating the food is mounted, a heater for heating the cooking container, and a controller for controlling the heater. Further, the heating cooker includes a casing which has an upper surface which is configured by a top plate and incorporates at least a heater and a controller, a supporter for accommodating the casing, and a mounting table mounting and accommodating the supporter in an opening portion, and a weight detector for detecting the weight. The casing is supported by the supporter via the weight detector at a position lower than an opening surface of the opening portion of the mounting table, and the weight detector may be configured to detect a weight of the cooking container mounted on the top plate.

According to the configuration, the weight detector is not disposed in the gap between the kitchen table which is the mounting table and the top plate. Therefore, the height of the heating cooker further projecting than the mounting table in the upper direction can be suppressed to be lowered. Accordingly, design ability is improved. In addition, when handling the pot, the possibility that the pot hit the end portion of the top plate is decreased. Accordingly, high workability and convenience can be provided to the user.

In addition, the casing can be supported by the supporter via the weight detector at a position lower than the opening portion of the mounting table. Therefore, the height between the supporter and the top plate can be suppressed to be lowered. Accordingly, the casing can be accommodated between the lower step of the step of the opening portion of the mounting table and the upper surface of the mounting table. In other words, the difference in height between the upper surface of the mounting table and the surface of the top plate can easily be decreased even in a suspended form of the supporter of the exemplary embodiment. Therefore, design ability and convenience are improved.

In addition, a weight detector is disposed between the casing and the supporter in the inside portion of the mounting table with less height restriction. Therefore, for example, weight detector 7 having high height of components can be disposed. In other words, a beam type load cell providing a through hole with high detection accuracy can be adopted as the weight detector 7 by suppressing characteristic changes due to external factors such as temperature.

Further, the weight detector is not disposed on the mounting table. Therefore, even if liquid materials such as soup, stew, soy sauce, and oil flow out on the mounting table 12, the liquid material does not reach the weight detector. Accordingly, the generation of rusting of metal components or the like and deterioration of resin components or the like used in the weight detector can be decreased. As a result, a heating cooker having an excellent configuration in the viewpoints of durability and reliability can be realized.

In addition, in the heating cooker of the disclosure, the weight detector may be disposed between the casing and the supporter.

According to the configuration, the weight detector is disposed on the outside of the casing. Therefore, in a case where the performance of the weight detector is deteriorated due to long-term use, impact, or the like, it is possible to cope with replacement of only the weight detector without replacement for each casing. In other words, the heating cooker can be continuously used by simple replacement work. As a result, a heating cooker which is excellent in economic efficiency and workability can be realized.

In addition, the heating cooker of the disclosure includes a casing opening portion provided on a bottom surface of the casing, and a connector which is in contact with the weight detector and the supporter via the casing opening portion. The weight detector may be disposed in an inside portion of the casing, and the casing may be configured to be supported by the supporter via the connector.

According to the configuration, the weight detector is provided in the inside of the casing. Therefore, for example, problems such as transportation in the unpacked state at the factory and damage due to contact at the time of installation is unlikely to be generated. Further, weight detector 7 is unlikely to be dirt. Accordingly, a heating cooker which is excellent in workability such as installation can be provided by handling of the heating cooker being.

In addition, the weight detector of the heating cooker of the disclosure includes at least a weight sensor and a load transmitter, the supporter includes a load receiver at a position facing the load transmitter, and the casing may be configured to be supported by the supporter by being in contact with the load transmitter and the load receiver. Accordingly, the casing can be supported by the supporter.

In addition, the load transmitter of the heating cooker of the disclosure may include a projecting portion or a concave portion, and the load receiver may include a concave portion which is in contact with the projecting portion or a projecting portion which is in contact with the concave portion of the transmitter. Accordingly, the weight detector is supported by point contact. As a result, the weight of the object to be heated can be detected with high detection accuracy.

In addition, the weight detector of the heating cooker of the disclosure includes at least a weight sensor, a load transmitter, a connector or a load receiver, and the supporter includes a load receiver on a position facing the connector or a connector on a position facing the load receiver, and the casing may be supported by the supporter by being in contact with the connector and the load receiver. Accordingly, the weight detector can be disposed in the inside of the casing. As a result, damage to the weight detector due to collision or the like can be prevented in advance.

In addition, the connector of the heating cooker of the disclosure may include a projecting portion or a concave portion, and the load receiver may include a concave portion which is contact with the projecting portion or a projecting portion which is contact with the concave portion. Accordingly, the weight detector is supported by point contact. As a result, the weight of the object to be heated can be detected with high detection accuracy.

In addition, the supporter of the heating cooker of the disclosure may include an opening portion, a hole or a slit on a bottom surface of the supporter. Accordingly, the liquid material or a foreign matter is prevented from staying in the inside of the supporter. As a result, the heating cooker can be maintained more hygienically.

In addition, the mounting table of the heating cooker of the disclosure may include a step on the opening portion side, and the supporter may be configured to be mounted on the step. Accordingly, it is possible to eliminate the step between the mounting table and the top plate and to set the full flat state. As a result, generation of problems due to collision with an object to be heated can be prevented in advance, and design ability and convenience are further improved.

In addition, the casing of the heating cooker of the disclosure may include a steel plate fixed to the top plate and the weight detector may be disposed on an outside of a bottom surface of the steel plate. Accordingly, the influence on the weight detector due to the penetration of the liquid material can be decreased. In addition, it a weight detector with high height can be disposed. As a result, it is possible to detect the weight of the object to be heated with high detection accuracy and to cook efficiently.

In addition, the heating cooker of the disclosure, a recess recessed in the top plate side may be provided on the bottom surface of the steel sheet, and the weight detector may be disposed in the recess. Accordingly, the casing can be made thinner.

### INDUSTRIAL APPLICABILITY

According to the heating cooker of the disclosure, even if a liquid material flows out on a kitchen table which is a mounting table, accuracies and reliability can be secured without affecting the weight detector due to penetration of a liquid material. In addition, the height of the heating cooker further projecting in the upper direction than the kitchen table is suppressed to be lowered. Therefore, it can be applied to various applications of the cooking heater which are demanded for high design ability and convenience.

### REFERENCE MARKS IN THE DRAWINGS

- 1: cooking container
- 2: top plate
- 2a, 12b: upper surface
- 3: heater
- 4: controller
- 5: casing
- 5a, 6a: flange
- 5b, 6b: bottom surface
- 5c: inside wall
- 5d: projecting portion
- 6: supporter
- 6bb, 12a: opening portion
- 6c: hole
- 7, 405a, 405c: weight detector
- 7a: signal line
- 8: operating display
- 9: inverter
- 10: driving controller
- 11: steel plate
- 11b: recess
- 12: mounting table
- 12aa: end portion
- 12c: step
- 12cc: lower step
- 13: weight sensor
- 13a: through hole
- 14: fixed connector
- 15: load transmitter
- 15a, 17a: projecting portion
- 16: load receiver
- 16a: concave portion
- 17: connector
- 18: casing opening portion
- 122, 202: object to be heated
- 123, 203, 301, 402: top plate
- 124: heater
- 125, 205a, 205b: temperature detector
- 126: inverter
- 127: controller
- 128, 221, 222, 223: weight detector
- 130: operator
- 132: elastic body
- 133: magnetic shielding ring
- 134: storage portion
- 204a, 204b: heating coil
- 302: support leg
- 313: pressure sensor
- 403: outer flange
- 404: casing
- 406: kitchen table

## Claims

1. A heating cooker, comprising:
a top plate for mounting a cooking container accommodating food;
a heater for heating the cooking container;
a controller for controlling the heater;
a casing which includes an upper surface configured by the top plate and which incorporates at least the heater and the controller;
a supporter for accommodating the casing;
a mounting table for mounting and accommodating the supporter in an opening portion; and
a weight detector for detecting weight,
wherein the casing is supported by the supporter via the weight detector at a position lower than an opening surface of the opening portion of the mounting table, and
wherein the weight detector detects a weight of the cooking container mounted on the top plate.

2. The heating cooker of Claim 1,
wherein the weight detector is disposed between the casing and the supporter.

3. The heating cooker of Claim 1, further comprising:
a casing opening portion which is provided on a bottom surface of the casing; and
a connector which passes through the casing opening portion and is in contact with the weight detector and the supporter,
wherein the weight detector is disposed in an inside portion of the casing, and
wherein the casing is supported by the supporter via the connector.

4. The heating cooker of Claim 1,
wherein the weight detector includes at least a weight sensor and a load transmitter,
wherein the supporter includes a load receiver on a position facing the load transmitter, and
wherein the casing is supported by the supporter by being in contact with the load transmitter and the load receiver.

5. The heating cooker of Claim 4,
wherein the load transmitter includes a projecting portion or a concave portion, and
wherein the load receiver includes a concave portion which is in contact with the projecting portion or a projecting portion which is in contact with the concave portion.

6. The heating cooker of Claim 3,
wherein the weight detector includes at least a weight sensor, a load transmitter and a connector or a load receiver,
wherein the supporter includes a load receiver on a position facing the connector or a connector on a position facing the load receiver, and
wherein the casing is supported by the supporter by being in contact with the connector and the load receiver.

7. The heating cooker of Claim 6,
wherein the connector includes a projecting portion or a concave portion, and
wherein the load receiver includes a concave portion which is in contact with the projecting portion or a projecting portion which is in contact with the concave portion.

8. The heating cooker of Claim 1,
wherein the supporter includes an opening portion, a hole, or a slit on a bottom surface of the supporter.

9. The heating cooker of Claim 1,
wherein the mounting table includes a step on the opening portion side, and
wherein the supporter is mounted on the step.

10. The heating cooker of Claim 1,
wherein the casing includes a steel plate fixed to the top plate, and
wherein the weight detector is disposed on an outside of a bottom surface of the steel plate.

11. The heating cooker of Claim 10,
wherein the bottom surface of the steel plate includes a recess recessed in the top plate side, and
wherein the weight detector is disposed in the recess.
